(19) **Europäisches Patentamt**

**European Patent Office**

**Office européen des brevets**

(11) Veröffentlichungsnummer: **0 126 726**
**A1**

(12) ## EUROPÄISCHE PATENTANMELDUNG

(21) Anmeldenummer: **84890085.8**

(22) Anmeldetag: **10.05.84**

(51) Int. Cl.³: **F 24 J 3/02**

(30) Priorität: **10.05.83 AT 1718/83**

(43) Veröffentlichungstag der Anmeldung: **28.11.84**
**Patentblatt 84/48**

(84) Benannte Vertragsstaaten: **AT BE CH DE FR GB IT LI LU NL SE**

(71) Anmelder: **Freller, Walter, Wallernstrasse 20, A-4522 Sierning (AT)**

(72) Erfinder: **Freller, Walter, Wallernstrasse 20, A-4522 Sierning (AT)**

(54) **Dachelement.**

(57) Modulartiges Dachelement (1) oder Wandelement so ausgebildet, dass es als isoliertes modulartiges Dach- oder Wandelement und als Energiedachelement (3) für ein druckloses mit Wärmeträgermedium durchströmtes modulartiges Energiedachelement ausbaubar ist und auch als verstärkter Wärmesammler, ohne durchfliessenden Wärmeträgermedium und ohne unterer Isolation aber mit der transparenten Abdeckung (2) zum Erwärmen unterhalb des Daches befindlichen Luftraumes ausbaubar ist, sowie zur Befestigung von Solarzellen dient ohne dabei das modulartige Dachelement zu verändern, wobei das modulartige Dachelement mit zusätzlichen Befestigungsmöglichkeiten für die transparente Abdeckung (2), wie zum Beispiel Schrauben, Verklebeflächen (16), Leisten (12), Spangen (10), versehen ist, wobei dadurch das modulartige Dachelement eine spezielle Ausbildungsform hat.

# Dachelement

Technisches Gebiet:

Die Erfindung bezieht sich auf ein modulartiges Dachelement oder Wandelement, daß mit Befestigungsmitteln an der Dachkonstruktion befestigt ist und zu einer ziegelartigen Eindeckung und Wandverkleidung verwendbar ist.

Zugrunde liegender Stand der Technik:

Herkömmliche modulartige Dachelemente dienen nur der Dacheindeckung oder Wandverkleidung und sind nicht als modulartiges Energiedachelement ausgebildet und auch nicht ausbaubar, wobei modulartige Energiedachelemente wie zum Beispiel ÖS 05368265 oder US 4,153,037 sind nur zum Erstellen eines drucklosen Energiedaches in dachziegelartiger Abdeckung geeignet. Modulartige Dachelemente nachträglich mit einer Wärmeisolation und einer modulartigen transparenten Abdeckung zu versehen, scheitert an einer dauerhaften Befestigung bzw. läßt der hohe Massenanteil des Dachelementes einen schlechten Wirkungsgrad erwarten. Medienzu- und Medienableitungen sind nicht vorgesehen. Auch eine kompakte nachträgliche Integration dieser Zuleitungen sind nicht möglich. Würde man sie mit hohem Aufwand doch zu einem drucklosen Energiedach umbauen, würde erhöte Oberflächenkorossion am Dachelement auftreten,daß die Dachelemente vorzeitig zerstören.

Offenbarung der Erfindung:

Die Erfindung besteht darin, modulartige Dachelement oder Wandelement so auszubilden, daß es als isoliertes modulartiges Dach- oder Wandelement und als Energiedachelement für ein druckloses mit Wärmeträgermedium durchströmtes Energiedachelement dient, und auch als verstärkter Wärmesammler, ohne durchfließenden Wärmeträgermedium und ohne Isolation aber mit der transparenten Abdeckung zum Erwärmen des unterhalb des

Daches befindlichen Luftraumes dient, sowie zur Befestigung von Solarzellen dient, ohne dabei das modulartige Dachelement zu verändern wobei das modulartige Dachelement ausgebildet ist um modulartige transparente Abdeckungen aufzunehmen, um dadurch ein druckloses Energiedachelement zu schaffen, daß mindestens ein oder mehrere Abflußrinnen aufweist die eine rauhe,matte oder glatte Oberfläche besitzen können, aber vorzugsweise im Rinnental glatt hoch, gleitfähig sind um das abfließende Wärmeträgermedium rasch und vollständig abzuleiten, daß das modulartige Dachelement mit zusätzlichen Befestigungsmöglichkeiten für die transparente Abdeckung wie z. B. Schrauben, Verklebeflächen, Leisten, Spangen versehen ist, daß die transparente Abdeckung durch die hochgezogenen Enden des modulartigen Dachelementes geführt ist, daß der überlappende Teil des modulartigen Dachelementes die transparente Abdeckung niederhält, daß die transparenten Abdeckungen unter dem überlappenden Ende der modulartigen Dachelemente in der Fläche kleiner sind um unterschiedliche Wärmeausdehnungen der transparenten Abdeckungen aufzunehmen, daß das modulartige Dachelement im Bereich der seitl.Auflageflächen der transparenten Abdeckung einen staubablagernden regenabführenden durchgehenden Kanal besitzt, daß die am First und an der Traufe verlegte modulartige Dachelemente mit einem Rohrstück versehen sind, die für die Wärmeträger Zu- und Ableitung dienen, daß das Rohrstück an beiden Enden einen Schrägsitz besitzt der über die Gleitstücke des vorherigen Rohrstückes , die eingelegte Dichtung mit einem Spannelement zusammenspannt, daß die Zuleitungs und Ableitungsöffnungen am Rohrstück mit Silikon ausgekleidet sind um Verkalkungen zu verhindern, daß das an der Traufe verlegte modulartige Dachelement mit dem kuppelbaren Rohrstück, einen zusätzlichen Rinnenteil aufweist welcher zur Regenableitung dient, daß die modulartige, wärmeisolierte Dachelemente auf einem Brett oder Latte befestigt sind, die quer zur Dachlattung liegen, wobei das Befestigungselement vom Scheitelpunkt bis zum Befestigungspunkt im überlappenden Teil frei stehend ist, um Wärme-aus-Dehnung oder Verschiebungen des modulartigen Dachelementes zu ermöglichen, daß das modulartige Dachelement auf den oberen überlappenden Enden mehrere Ausgleichsbohrungen im engen Abstand hintereinander hat, um verschiedenen Dachlängen durch mehr oder weniger überlappen mit dem gleichen modulartigen Dachelement abgedeckt werden können, daß das Rohrstück an der Traufe, welches mit dem modulartigen Dachelement verbunden ist als eine hintereinander zusammen kuppelbare Regenrinne dient, daß das modulartige Dachelement als Trägerplatte beschaffen ist und zur Befestigung von Solarmodulen mit Hilfe von Spangen, Leisten, Schrauben oder Verklebung dient.

Bei dieser modulartigen ausgeführten Eindeckung oder Wandverkleidung entsteht der wesentliche Vorteil, daß auf einer Dachfläche mit einem modulartigen Dachelement je nach Bedarf nebeneinander, Dacheindeckung, druckloses Energiedach, mit oder ohne flüssigen Wärmeträgermedium u. Solarzellen, ohne Übergänge von einem zum anderen System zu installieren.

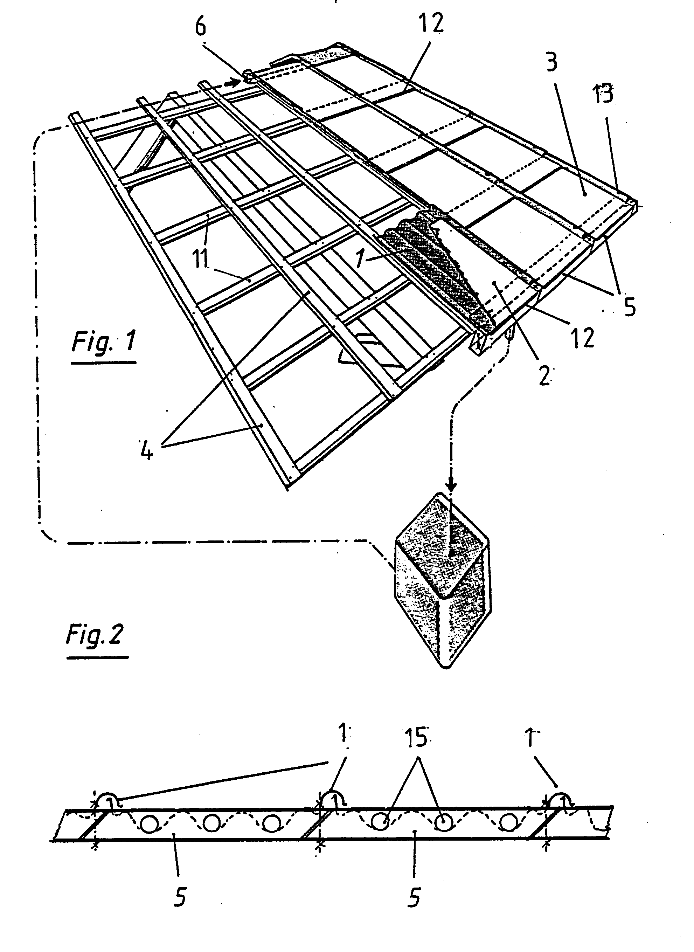

In der Zeichnung ist eine beispielsweise Ausführungsform des Erfindungsgegenstandes dargestellt. Fig. 1 zeigt eine Dachkonstruktion auf der mit der Latte 4 und des Befestigungselementes 13 die modulartigen mit der transparenten Abdeckung 2 versehenen Dachelemente 1 die überlappend an der Dachkonstruktion befestigt sind. Die Dachelemente 1 sind mit dem Rohrstück 5 versehen wobei eines nur teilweise mit der transparenten Abdeckung 2 abgedeckt ist. Weiters ist die Zuleitung am First durch Rohrstücke 6 die am oberen Ende des Dachmoduls 1 befestigt sind, dargestellt. Wie gezeigt wird, sind diese modulartigen Dachelemente 1 nicht isoliert und für die verstärkte Wärmeabgabe in die Luft des Dachraumes ohne zirkulation des flüssigen Wärmeträgermediums, geeignet.

Fig. 2 zeigt einen Längsschnitt von mehreren zusammengesetzten modulartigen Dachelementen 1 die mit  Rohrstücke  5 versehen sind in denen, die Zu- und Ableitungsöffnungen 15 für die Ein- und Ausbringung des Wärmeträgermediums dienen sind mit Silikon ausgekleidet.

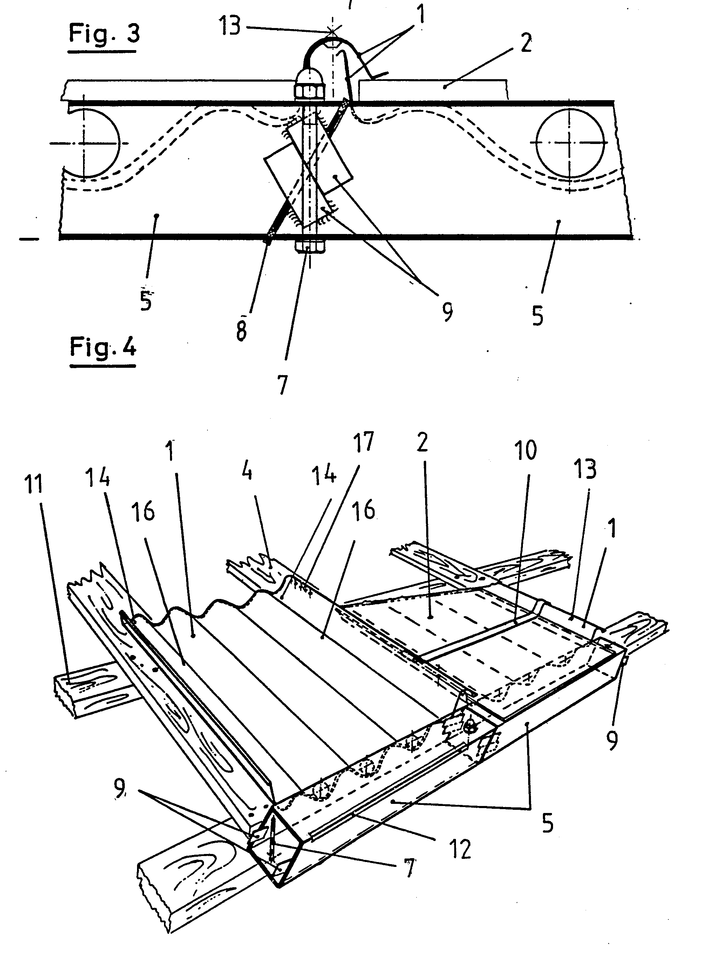

Fig. 3 zeigt das Kupplungsdetail bzw. die beiden Enden der Rohrstücke 5 die jeweils Gleitstücke 9 besitzen und durch das Spannelement 7 mit der dazwischenliegenden Dichtung 8 zusammengehalten werden. Die hochstehenden Enden der modulartigen Dachelemente 1 überlappen sich und sind durch die Befestigungselemente 13 an der Dachkonstruktion niedergehalten die dabei die transparente Abdeckung 2 einklemmt.

-4-

Fig 4 zeigt zwei zusammengekuppelte Dachelemente 1 die mit Rohrstücken 5 versehen sind und mit dem Spannelement 7 und dem Gleitstück 9 und der dazwischen eingelegten Dichtung 8 zusammengespannt sind, wobei die Spange die transparente Abdeckung 2 zusätzlich niederhält die ansonsten mit Verklebeflächen 16 Leisten 12 oder Schrauben zusätzlich gehalten werden können.

An dem vorderen modulartigen Dachelement 1 sind an den Seiten nach unten führenden Kanäle 14 ersichtlich. Die Lochreihe 17 am rechten oberen Teil des modulartigen Dachelementes 1 zeigt die variable Befestigung.

_4a_

| | |
|---|---|
| 1 | Dachelement |
| 2 | Transparente Abdeckung |
| 3 | Energiedachelement |
| 4 | Brett oder Latte |
| 5 | Rohrstück Traufe |
| 6 | Rohrstück First |
| 7 | Spannelement |
| 8 | Dichtung |
| 9 | Gleitstücke |
| 10 | Spange |
| 11 | Dachlattung |
| 12 | Leiste |
| 13 | Befestigungselement |
| 14 | Kanal |
| 15 | Zu- und Ableitungsöffnungen |
| 16 | Verklebe- und Auflageflächen |
| 17 | Ausgleichsbohrungen |

Patentansruch

Modulartiges Dachelement oder Wandelement, daß mit Befestigungsmitteln an der Dachkonstruktion befestigt ist und zu einer ziegelartigen Eindeckung und Wandverkleidung verwendbar ist, dadurch gekennzeichnet, daß das modulartige Dachelement (1) ausgebildet ist um
modulartige transparente Abdeckungen (2) aufzunehmen, um dadurch ein
druckloses Energiedachelement (3) zu schaffen,

daß mindestens ein oder mehrere Abflußrinnen in Längsrichtung des
modulartigen Dachelementes (1) aufweist, die eine rauhe, matte oder
glatte Oberflächen besitzen können, aber vorzugsweise im Rinnental
glatt hoch, gleitfähig sind um das abfließende Wärmeträgermedium rasch
und vollständig abzuleiten,

wobei das modulartige Dachelement (1) mit zusätzliche Befestigungsmöglichkeiten für die transparente Abdeckung (2) wie zum Beispiel
Schrauben, Verklebeflächen (16), Leisten (12), Spangen (10) versehen
ist,

daß die transparente Abdeckung (2) durch die hochgezogenen Enden des
modulartigen Dachelementes (1) geführt ist,

daß der überlappende Teil des modulartigen Dachelementes (1) die transparente Abdeckung (2) niederhält,

daß die transparenten Abdeckungen (2) unter dem überlappenden Ende der
modulartigen Dachelemente (1) in der Fläche kleiner sind um unterschiedliche Wärmeausdehnungen der transparenten Abdeckungen aufzunehmen,

daß das modulartige Dachelement (1) im Bereich der seitlichen Auflageflächen (16) der transparenten Abdeckung (2) einen staubablagernden
regenabführenden durchgehenden Kanal (14) besitzt,

daß die am First und an der Traufe verlegte modulartige Dachelemente (1)
mit einem Rohrstück (6) und (5) versehen sind, die für die Wärmeträger
Zu- und Ableitung dienen, daß das Rohrstück (6) und (5) an beiden Enden einen Schrägsitz besitzt der über die Gleitstücke (9) des vorherigen Rohrstückes (6) und (5), die eingelegte Dichtung (8) mit einem Spannelement (7) zusammenspannt,

daß die Zu- und Ableitungsöffnungen am Rohrstück (6) und (5) mit Silikon ausgekleidet sind um Verkalkungen zu verhindern, daß das an der Traufe verlegte Dachelement (1) mit dem kuppelbaren Rohrstück (5), einen zusätzlichen Rinnenteil aufweist welcher zur Regenableitung dient,

daß die modulartige, Wärmeisolierte Dachelemente (1) auf einem Brett oder Latte (4) befestigt sind, die quer zur Dachlattung (11) liegen, wobei daß Befestigungselement (13) vom Scheitelpunkt bis zum Befestigungspunkt im überlappenden Teil frei stehend ist, um Wärmeausdehnung oder Verschiebungen des modulartigen Dachelementes zu ermöglichen,

daß das modulartige Dachelement (1) auf den oberen überlappenden Enden mehrere Ausgleichsbohrungen (17) im engen Abstand hintereinander hat, um verschiedene Dachlängen durch mehr oder weniger überlappen mit dem gleichen modulartigen Dachelement (1) abgedeckt werden können,

daß das Rohrstück (6) an der Traufe, welches mit dem modulartigen Dachelement (1) verbunden ist als eine hintereinander zusammen kuppelbare Regenrinne ausgebildet ist,

daß das modulartige Dachelement (1) als Trägerplatte beschaffen ist und zur Befestigung von Solarmodulen mit Hilfe von Spangen, Leisten, Schrauben oder Verklebung dient.

Fig. 1

Fig. 2

0126726

1/2

0126726

Fig. 3

Fig. 4

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | US-A-4 153 037 (ISAACSON) <br> * Insgesamt * | 1 | F 24 J 3/02 |
| A | US-A-4 244 355 (STOUT) <br> * Insgesamt * | 1 | |
| A | FR-A-2 330 974 (AUNAC) <br> * Insgesamt * | 1 | |
| A | FR-A-2 354 427 (STRAZA) <br> * Insgesamt * | 1 | |
| A | FR-A-2 395 472 (HASTWELL) <br> * Insgesamt * | 1 | |
| A | DE-A-2 755 555 (SCHLATTER) <br> * Insgesamt * | 1 | RECHERCHIERTE SACHGEBIETE (Int. Cl. ³) <br><br> F 24 J <br> F 16 L |
| A | FR-A-2 466 718 (LEGRIS) <br> * Insgesamt * | 1 | |
| A | US-A-4 271 819 (FARRELL) <br> * Insgesamt * | 1 | |
| A | GB-A-1 563 709 (MASINI et al.) <br> * Insgesamt * | 1 | |
| | --- -/- | | |

Der vorliegende Recherchenbericht wurde für alle Patentansprüche erstellt.

| Recherchenort <br> DEN HAAG | Abschlußdatum der Recherche <br> 06-08-1984 | Prüfer <br> SILVIS H. |
|---|---|---|

Europäisches
Patentamt

**EUROPÄISCHER RECHERCHENBERICHT**

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | BE-A- 895 470 (SOETENS) <br> * Insgesamt * <br><br> --- | 1 | |
| A | EP-A-0 048 708 (FRELLER) <br><br> --- | | |
| A | EP-A-0 014 682 (ELIOFORM A.G.) <br><br> --- | | |
| A | FR-A-2 489 942 (RICHAUD) <br><br> ----- | | |
| | | | **RECHERCHIERTE SACHGEBIETE (Int. Cl. ³)** |

Der vorliegende Recherchenbericht wurde für alle Patentansprüche erstellt.

| Recherchenort <br> DEN HAAG | Abschlußdatum der Recherche <br> 06-08-1984 | Prüfer <br> SILVIS H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82